# EUROPEAN PATENT SPECIFICATION

(11) **EP 0 851 837 B1**
(45) Date of publication and mention of the grant of the patent: **05.09.2001**
(21) Application number: 97915380.6
(22) Date of filing: 14.03.1997
(51) Int. Cl.: C01B 37/00, C01B 37/02, B01J 29/04

(54) **SYNTHESIS OF ZEOLITE AND ZEOTYPES ISOMORPHOUS WITH ZEOLITE BETA**
SYNTHESE EINES ZEOLITHS UND MIT BETA-ZEOLITH ISOMORPHEN ZEOTYPEN
SYNTHESE DE ZEOLITE ET DE ZEOTYPES ISOMORPHES AVEC LE ZEOLITE BETA

(30) Priority: 14.03.1996 ES 9600625 U
(43) Date of publication of application: 08.07.1998
(73) Proprietor: CONSEJO SUPERIOR DE INVESTIGACIONES CIENTIFICAS, 28006 Madrid (ES); UNIVERSIDAD POLITECNICA DE VALENCIA, 46022 Valencia (ES)
(72) Inventor: VALENCIA VALENCIA, Susana c/o Instituto de, E-46022 Valencia (ES); CAMBLOR FERNANDEZ, Miguel Angel c/o Universidad, E-46022 Valencia (ES); CORMA CANOS, Avelino c/o Universidad Politécnica, E-46022 Valencia (ES)
(74) Representative: Ungria Lopez, Javier
(86) International application number: EP9701349
(87) International publication number: WO9733830

(56) References cited:
- EP-A- 0 351 311
- EP-A- 0 419 334
- WO-A-94/02245
- JOURNAL OF THE CHEMICAL SOCIETY, no. 20, 21 October 1996, LETCHWORTH GB, pages 2365-2366, XP002034122 CAMBLOR MIGUEL A. ET AL.: "Spontaneous nucleation and growth of pure silica zeolite-beta free of connectivity defects"
- JOURNAL OF THE CHEMICAL SOCIETY, no. 20, 21 October 1996, LETCHWORTH GB, pages 2367-2368, XP002033134 BLASCO TERESA ET AL.: "Unseeded synthesis of Al-free Ti-beta zeolite in fluoride medium: a hydrophobic selective oxidation catalyst"

## Description

The present invention relates to a process for the preparation of crystalline materials, in particular zeolites having the structure of zeolite beta.

Zeolites are micropcrous crystalline materials of variable composition, characterized by a crystalline lattice of QO₄ tetrahedra (where Q normally represents Si and Al, but may also represent titanium (Ti), germanium (Ge), boron (B), gallium (Ga), etc., in which case the compounds are termed zeotypes) which share all their vertices, giving rise to a three-dimensional structure which contains channels and/or voids of molecular dimensions. When some of the atoms Q possess an oxidation number of less than +4, the crystalline lattice formed possesses negative charges which are compensated by means of the presence of organic or inorganic cations in the channels or voids. Organic molecules, salts and water (H₂O) can also ledge in the said channels and voids, so that, generally speaking, the chemical composition of zeolites may be represented by means of the following empirical formula:

p(M₁/ₙAO₂).qEO₂.zR.wH₂O

where M is one or more organic or inorganic cations of charge +n; A is one or more trivalent elements; E is one or more tetravalent elements; and R is one or more organic substances or a salt. Although the nature of M, A, E and R and the values of p, q, z and w can, in general, be varied by means of post-synthesis treatments, the chemical composition of a zeolitic material (as synthesized or after its calcination) possesses a range characteristic of each zeolite or zeotype and of the method of obtaining it.

Furthermore, a zeolitic material is characterized, in addition, by its crystalline structure, which defines its system of channels and voids and gives rise to a specific X-ray diffraction pattern. Accordingly, zeolites and zeotypes differ from one another in their range of chemical composition plus their X-ray diffraction pattern. The intensity of the diffraction lines, by reference to an appropriate standard sample, may be used as an indication of "crystallinity". This concept can refer both to the amount of matter of a crystalline phase in a solid containing, in addition, other phases (for example an amorphous solid), or to the structural "perfection" of the solid. Both the more or less perfect crystalline structure and the chemical composition determine, in addition, the physicochemical properties of each zeolite or zeotype and its applicability in different industrial processes. Other characteristics of the zeolite which can have a great influence on its applicability are the crystal size and the presence of lattice defects. Both these properties and the chemical composition of the material can be highly dependent on the method of preparation and/or subsequent treatments.

Zeolite beta (US Pat. 28,341) is a microporous crystalline material characterized by its crystalline structure, which produces a specific X-ray diffraction pattern and a unique system of channels, and by its chemical composition, which may be represented by the empirical formula

[bNa(1-b)TEA]AlO₂.cSiO₂.dH₂O

where b < 1, c = 5-100, d is a value up to about 4 and TEA represents the tetraethylammonium cation. In general, zeolite beta is synthesized in the presence of alkali metal cations, and the crystalline product usually possesses a crystal size of between 0.1 and 1 *µ*m. In order for the zeolite to possess adsorption properties, the synthesized material has to be calcined in order to decompose the tetraethylammonium cation and liberate the intrazeolitic void volume. This calcination process is usually accompanied by a considerable loss of crystallinity and by a process of dealuminization. The loss of crystallinity may be due to a process of partial conversion of the material to the amorphous state, which entails a loss of the specific properties of the zeolite in catalytic processes. It may also be due to a large increase in the concentration of lattice defects (Si-OH type), affecting the physicochemical properties of the material and its stability in subsequent thermal processes (such as those required for regenerating a catalyst in various hydrocarbon conversion processes, such as the catalytic cracking of hydrocarbons). The process of dealuminization entails the loss of Al from the lattice, and consequently of the corresponding Bronsted acid centres, and gives rise to extra-lattice aluminium species which may be of very diverse types and may have substantial repercussions on the activity of the material. If the synthesis is carried out in the presence of alkali metal cations, a cation exchange has to be carried out in order to obtain the acidic form which is active in catalytic processes of conversion of hydrocarbons.

A zeotype isomorphous with zeolite beta may also be synthesized with titanium (Ti) atoms in the lattice, according to Spanish Patent 2,037,596. In this case, the zeotype may be used as catalyst in processes for the selective oxidation of organic products using hydrogen peroxide (H₂O₂) or organic hydroperoxides or peroxides as oxidizing agent. In this case, the chemical composition of the material in its anhydrous and calcined state may be represented by the formula

e (HAO₂).fTiO₂.SiO₂

where A is a trivalent element (Al, Ga, B, etc.) and e can take values between 0 and 0.1.

WO-A-9402245 discloses a process for preparing a titanium containing zeolite Beta from a synthesis mixture containing a source of Ti, a source of Al, a source of silicon and tetraethylammoniumhydroxide (TEAOH) and water. Said process does not allow the preparation of acidic zeolite Beta materials and moreover requires separation of the zeolite material from the mother liquor by centrifugation.

EP-A-0419334 discloses a method for synthesizing a crystalline zeolite Beta material from a reaction mixture comprising a source of silicon, a source of aluminium into which diazabicyclo-1,4(2,2,2)octane (DABCO) is introduced as templating agent and a source of fluoride (F-) is introduced as a mobilizing agent. However, as revealed in a subsequent publication Caullet, P. et al.: "SYNTHESIS OF ZEOLITE BETA FROM NONALKALINE FLUORIDE AQUEOUS ALUMINOSILICATE GELS", March 1992, Vol. 12, pp. 240-250, said method showed to compulsorily require the addition of crystallization seeds as well as Si/Al ratios being lower than 30 so that the method is unsuitable for preparing highly siliceous zeolite Beta materials or zeolite Beta materials lacking Al.

The present invention is aimed to overcome the drawbacks of prior art methods for preparing zeolite Beta materials.

In accordance with the present invention, there is provided a process for the preparation of a zeolitic crystalline material isomorphous to zeolite BETA which comprises the steps of
(i) forming a reaction mixture comprising water (H₂O), a source of silicon dioxide (SiO₂), a source of fluoride ions (F⁻), a source of tetraethylammonium cations (TEA⁺) and, optionally, a source of an oxide of a trivalent element (X₂O₃), the reaction mixture having a composition expressed in terms of mole ratios in the following ranges:
   H₂O/SiO₂, of from 4 to 50
   SiO₂/X₂O₃, of at least 10
   TEA⁺/SiO₂, of from 0.125 to 0.80
   F⁻/SiO₂, of from 0.1 to 2
(ii) crystallising the reaction mixture, and
(iii) recovering the crystalline material formed,
wherein the pH after completion of crystallization is in the range from 6 to 12, preferably from 8 to 9.5.

The reaction mixture may further comprise a source of tetravalent metal oxide, TO₂, in which T represents titanium or vanadium, and, optionally, a source of hydrogen peroxide (H₂O₂), the reaction mixture having a composition expressed in terms of mole ratios in the following ranges:
H₂O/SiO₂, of from 4 to 50
SiO₂/X₂O₃, of at least 10
TEA⁺/SiO₂, of from 0.125 to 0.80
F⁻/SiO₂, of from 0.1 to 2
SiO₂/TO₂, of at least 4
H₂O₂/TO₂, of from 0 to 50.

The present invention relates to a new method of synthesis of zeolitic materials isomorphous with zeolite beta, characterized by the relatively low pH of the synthesis medium and the use of F⁻ anions as mineralizing agent, and to the materials obtained, characterized by a high thermal stability, low concentration of SiO⁻ or SiOH defects and wide range of chemical composition and characterized in that their calcination enables the acidic form to be obtained without resorting to cation exchange processes. That is to say, the material in calcined form corresponds to the empirical formula

x(HXO₂).yTO₂.SiO₂

where T is a tetravalent element other than Si (Ti, V, etc.), X is a trivalent element (Al, Ga, Fe, B, Cr, etc.), x possesses a value of less than 0.2, it likewise being possible for it to be 0, and y can take values from 0 to 0.1. The use of the materials obtained in catalytic processes of conversion of hydrocarbons and functionalized hydrocarbons is also claimed. When y is not zero, the material (Ti-beta, V-beta, and the like) is also claimed in processes of selective oxidation of organic compounds using H₂O₂ or organic peroxides or hydroperoxides.

The preparation method in question is based on heating to temperatures of 363-473K, preferably 403-423K, a reaction mixture containing a source of silicon (amorphous silica, colloidal silica, silica gel, tetraalkyl orthosilicate, and the like, preferably amorphous silica or tetraethyl orthosilicate), optionally a source of aluminium (aluminium oxide or hydroxide, another aluminium salt, aluminate of an organic cation or metallic aluminium, preferably metallic aluminium or aluminium hydroxide) or another trivalent element (Cr, Ga, B, Fe, etc.), optionally a source of Ti (alkoxide or halide, preferably Ti tetraethoxide, tetrapropoxide or tetrabutoxide), V (such as, for example, vanadyl sulphate) or another tetravalent element, a structure-directing organic cation (preferably tetraethylammonium), optionally H₂O₂, a source of F⁻ anions and water, the presence of alkali metal cations being avoided. The sources of F⁻ anions and of organic cations are selected in such a way that the final pH after crystallization has taken place is in the range from 6 to 12, preferably in the range from 8 to 9.5. The composition of the synthesis mixture is characterized by the following ranges of mole ratios:
H₂O/SiO₂ = 4-50, preferably 4-20, more preferably 4-8
SiO₂/X₂O₃ = 10-∞, preferably greater than 14, more preferably greater than 20, even more preferably greater than 50, e.g. at least 100, 200, 500, 1000, 3000 or 5000
TEA⁺/SiO₂ = 0.125-0.80, preferably 0.15-0.72
F⁻/SiO₂ = 0.1-2, preferably 0.1-0.8
SiO₂/TO₂ = 4-∞, preferably 20-∞ or 40-∞
H₂O₂/TO₂ = 0-50, preferably 0-30 or 0-20
where T represents a tetravalent element (Ti, V, etc.) and X a trivalent element (Al, B, Ga, Cr, Fe, etc.).

With the object of promoting crystallization, it may be expedient to add crystals of zeolite beta to the reaction mixture so that they act as seeds. These crystals may be added as a dry solid, as a suspension of the crystals in an appropriate liquid or as a preorganized gel. An especially appropriate seed for zeolite beta is described in Spanish Patent Application No. P9501552.

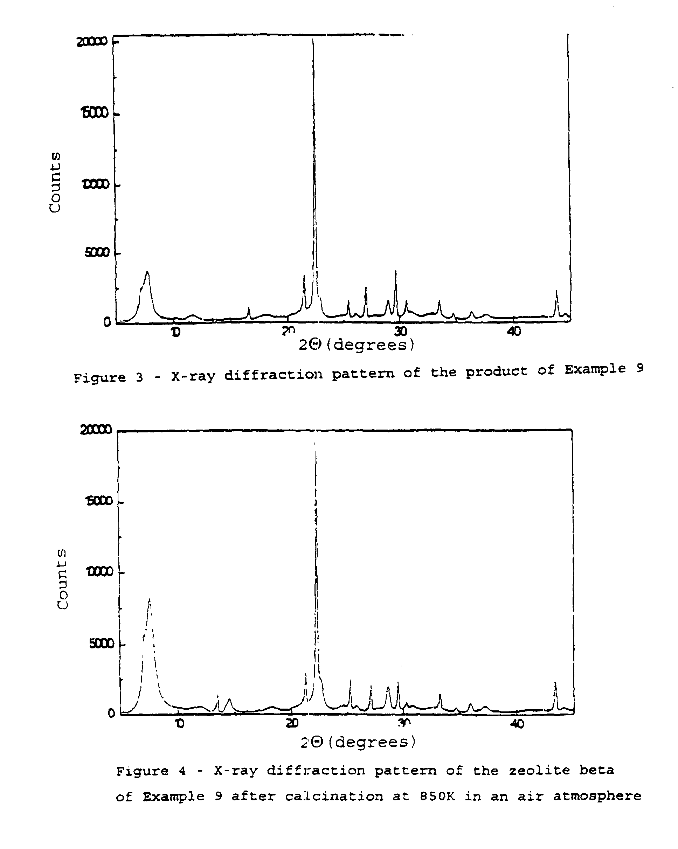

In distinction to other methods of synthesis which require centrifugation in order to separate the zeolite, the method which is the subject of the present invention enables the zeolite to be separated from its mother liquors by filtration. As a result, materials isomorphous with zeolite beta of very high crystallinity are obtained, which may be calcined in order to remove the occluded organic material with low or zero loss of crystallinity (Fig. 3 and 4, CuKα radiation).

Another important difference with respect to other methods of synthesis of zeolite and zeotypes isomorphous with zeolite beta lies in the high efficiency of incorporation of Al and Si in the zeolite when the procedure of the present invention is followed in its aluminosilicate form. The said efficiency may be defined as the weight of Al or Si in the zeolite divided by the weight of Al or Si in the synthesis mixture and multiplied by one hundred. According to the literature (M.A. Camblor et al., Zeolites, 1991, 11, 792), the incorporation of Si in zeolite beta is typically less than 60% and decreases drastically on increase in the Si/Al ratio, which means in practice that it is impossible to exceed the Si/Al ratio limit = 100. According to the method of the present invention, the efficiency of incorporation both of Si and of Al is, in all cases, greater than 90%, making it possible to exceed the abovementioned Si/Al ratio limit, it even being possible to obtain purely siliceous zeolite beta and zeotypes Ti-beta and V-beta without Al or another trivalent element. This high efficiency of incorporation of Si and Al in the zeclite constitutes a noteworthy advantage of the method, of the present invention, since it enables the production cost of the zeolite to be reduced and the need for treatment and/or recycling of the waste waters to be improved considerably.

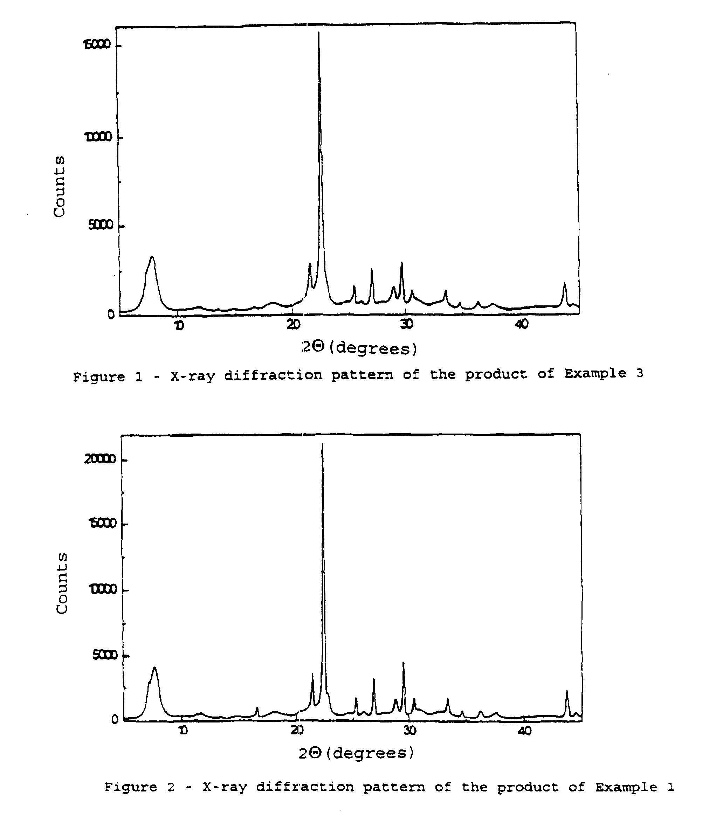

The solid product obtained possesses a diffraction pattern (CuKα radiation, Fig. 1, 2 and 3) essentially coincident with that of zeolite beta (US Pat. 28,341), although a better definition of the diffraction peaks is, in general, observed, and details appear which, while they are not perceptible in zeolite beta synthesized under other conditions, do indeed appear when the diffraction pattern is simulated from the structure proposed for this zeolite (Newsam, J.M., Treacy, M.M.J., Koetsier, W.T., de Gruyter, C.B., *Proc. R. Soc. Lond. A,* 1988, 420, 375). The high crystallinity of the material becomes evident when the area of the peaks is measured and compared with a zeolite beta of high crystallinity obtained by other methods, values equal to or greater than 100% being obtained. The better definition and resolution of the peaks may be attributed to the almost complete absence of connectivity defects of the Si-O⁻ or Si-OH type, and not only to a greater crystal size, since the latter usually lies within the ranges typical for this zeolite (< 4 *µ*m, generally < 0.5 *µ*m).

As regards the chemical composition of the zeolite obtained, the method of the present invention permits the synthesis of zeolite beta and zeotypes Ti-beta, V-beta, Cr-beta, and the like, with a variable Si/Al mole ratio in the range 5-∞, the high crystallinity always being maintained. The lower limit of this range is conditioned by the maximum content of tetraethylammonium cations which can be lodged in the zeolite channels (8 molecules per unit cell of 64 TO₄ units, T = Si or Al).

The applications of the material obtained by the present method, and which are claimed in the present specification, are:
- preparation of zeolite membranes on supports,
- catalyst additive for catalytic cracking,
- active component or additive in catalysts for isomerization of light paraffins,
- hydrocracking catalyst,
- mild hydrocracking catalyst,
- dewaxing and isodewaxing catalyst,
- catalyst for alkylation of isoparaffins with olefins and alkylation of aromatics with olefins and alcohols,
- catalyst for selective oxidation of organic compounds using H₂O₂ or organic peroxides or hydroperoxides; oxidation of alkanes to alcohols and ketones; oxidation of alcohols to ketones; hydroxylation of aromatics; epoxidation of olefins; oxidation of thioethers to sulphoxides and sulphones; ammoximation of cyclohexanone to cyclohexanone oxime with NH₃; and the like.

The present invention will be further understood from the following illustrative examples.

### Example 1

This example illustrates the preparation of a seeding gel, according to Spanish Patent Application No. P9501552, which will be used in some of the syntheses of the following examples.

5.56 g of AlCl₃.6H₂O are dissolved in 14.4 g of water, and the resulting solution is added to 134.36 g of tetraethylammonium hydroxide (35% by weight aqueous solution, Aldrich, Na < 2 ppm, K < 0.5 ppm). 120 g of tetraethyl orthosilicate are added to the resulting transparent solution and the mixture is stirred, allowing the ethanol produced to evaporate off at room temperature.

The final composition of the gel was, taking into account the evaporation of water,
SiO₂/Al₂O₃ = 50
TEA₂O/SiO₂ = 0.28
H₂O/SiO₂ = 6.4

The mixture is heated in autoclaves coated internally with PTFE at 413K. During the heating, the autoclaves are kept rotating (60 rpm). After 72 hours of heating, a colloidal dispersion of zeolite beta (which we refer to as "seeding gel" in the examples which follow) is obtained. A portion of this dispersion is centrifuged and its content is determined as 23.36 g of zeolite per 100 g of dispersion. The crystallinity of this zeolite is 90%, measured by comparison of the area of the most intense peak in the powder X-ray diffraction pattern of this sample and that of a zeolite beta standard.

### Example 2

This example illustrates the preparation of thermally stable zeolite beta with an Si/Al ratio ≈ 50, in the presence of HF and seed.

0.207 g of metallic aluminium is dissolved in 30 g of tetraethylammonium hydroxide (35% by weight aqueous solution, Aldrich, Na < 2 ppm, K < 0.5 ppm) and 2.31 g of deionized water. Separately, 80 g of tetraethyl orthosilicate (Merck) are added to 60.48 g of tetraethylammonium hydroxide (35%) and 11.45 g of deionized water. After this mixture has been stirred for a few minutes, the Al solution is added to it and the resulting mixture is kept stirring to evaporate off the ethanol produced, a transparent solution finally being obtained. 3% by weight of the seeding gel of zeolite beta prepared in Example 1 is then added and the mixture is stirred to homogenize it. Thereafter 8.64 g of concentrated hydrofluoric acid (48%) are added. The mixture takes on the appearance of a very dense gel. The composition of the mixture, expressed in terms of mole ratios and taking into account the evaporation of water, is
SiO₂/Al₂O₃ = 100
TEA₂O/SiO₂ = 0.28
(TEA⁺/SiO₂ = 0.56)
H₂O/SiO₂ = 7.3
F⁻/SiO₂ = 0.54

The mixture is introduced into steel autoclaves coated internally with PTFE, and heated to 413K. During crystallization, the autoclaves are kept rotating (60 rpm). After 90 hours at the crystallization temperature, the autoclaves are cooled and the contents (pH = 8.4) are filtered, 23.3 g of zeolite being obtained for every 100 g of gel. By X-ray diffraction, a high crystallinity of the zeolite (103% by measuring the area of peaks with respect to a zeolite beta taken as standard) is observed. The Si/Al mole ratio of the zeolite is, according to chemical analysis, 52. After calcination at 853K, the zeolite maintains its crystallinity (99% with respect to a standard).

### Example 3

This example illustrates the preparation of a zeolite beta of Si/Al ratio = 25, in the presence of HF and seed.

0.414 g of metallic aluminium is dissolved in 30 g of tetraethylammonium hydroxide (35% by weight aqueous solution, Aldrich, Na < 2 ppm, K < 0.5 ppm) and 0.21 g of deionized water. Separately, 80 g of tetraethyl orthosilicate are added to 63.71 g of tetraethylammonium hydroxide (35%) and 11.45 g of deionized water and the mixture is stirred. The Al solution is then added. The mixture is kept stirring at room temperature to evaporate off the ethanol produced. 8.64 g of HF (48%) are then added to the resulting solution. Thereafter 3% by weight of the seeding gel of Example 1 is added. The same procedure for heating and processing the product as in the previous example is followed. In this case the composition of the gel was
SiO₂/Al₂O₃ = 50
TEA₂O/SiO₂ = 0.29
(TEA⁺/SiO₂ = 0.58)
H₂O/SiO₂ = 7.4
F⁻/SiO₂ = 0.54

The autoclaves are cooled after 14 hours. The reaction mixture has a pH of ≈ 9.0. By X-ray diffraction (Figure 1), it is observed that the solid obtained on filtration is zeolite beta (23.89 g per 100 g of gel) of high crystallinity (102% by comparison with a standard). The Si/Al mole ratio of the zeolite is 29 according to chemical analysis. After calcination at 853K, the material maintains its crystallinity (92%).

### Example 4

This example illustrates the preparation of a zeolite beta of Si/Al ratio = 200, in the presence of HF and in the absence of seed.

0.046 g of metallic aluminium is dissolved in 20 g of tetraethylammonium hydroxide (35% by weight aqueous solution, Aldrich, Na < 2 ppm, K < 0.5 ppm) and 3.45 g of deionized water. Separately, 71.04 g of tetraethyl orthosilicate are added to 58.19 g of tetraethylammonium hydroxide (35%) and 9.13 g of deionized water and the mixture is stirred. The Al solution is then added. The mixture is kept stirring at room temperature to evaporate off the ethanol produced. 7.67 g of HF (48%) are then added to the resulting solution. The same procedure for heating and processing the product as in the previous example is followed. In this case the composition of the gel was
SiO₂/Al₂O₃ = 400
TEA₂O/SiO₂ = 0.27
(TEA⁺/SiO₂ = 0.54)
H₂O/SiO₂ = 7.4
F⁻/SiO₂ = 0.54

The autoclaves are cooled after 229 hours. The reaction mixture has a pH of ≈ 8.3. By X-ray diffraction (Figure 2), it is observed that the solid obtained on filtration is zeolite beta (22.96 g per 100 g of gel) of high crystallinity (104% by comparison with a standard). The Si/Al mole ratio of the zeolite is 211 according to chemical analysis. After calcination at 853K, the material maintains its crystallinity (102%).

### Example 5

This example illustrates the preparation of a zeolite beta of very high Si/Al ratio, in the presence of HF and of seed.

80.55 g of tetraethylammonium hydroxide (35% by weight aqueous solution, Aldrich, Na < 2 ppm, K < 0.5 ppm) and 11.45 g of deionized water are mixed. 73.82 g of tetraethyl orthosilicate are added to the resulting solution. The mixture is kept stirring at room temperature to evaporate off the ethanol produced. 7.97 g of HF (48%) are then added to the solution formed. Thereafter 2.9% by weight of the seeding gel of Example 1 is added. The same procedure for heating and processing the product as in Example 2 is followed. In this case the composition of the gel was
SiO₂/Al₂O₃ > 1000
TEA₂O/SiO₂ = 0.27
(TEA⁺/SiO₂ = 0.54)
H₂O/SiO₂ = 7.5
F⁻/SiO₂ = 0.54
where all of the aluminium comes from the seed.

The autoclaves are cooled after 14.5 hours. The reaction mixture has a pH of ≈ 8.8. By X-ray diffraction, it is observed that the solid obtained on filtration is zeolite beta (25.1 g per 100 g of gel) of high crystallinity (101% by comparison with a standard). The Si/Al mole ratio of the zeolite is 750 according to chemical analysis. After calcination at 853K, the material maintains its crystallinity (100%).

### Example 6

This example illustrates the preparation of an essentially siliceous zeolite beta in the presence of HF and seed.

80.55 g of tetraethylammonium hydroxide (35% by weight aqueous solution, Aldrich, Na < 2 ppm, K < 0.5 ppm) and 11.45 g of deionized water are mixed. 73.82 g of tetraethyl orthosilicate are added to the resulting solution. The mixture is kept stirring at room temperature to evaporate off the ethanol produced. 7.97 g of HF (48%) are then added to the solution formed. Thereafter 0.93 g of the solid seed of Example 1 is added after dealuminizing the seed completely by treatment with concentrated HNO₃ under reflux. The same procedure for heating and processing the product as in the previous example is followed. In this case the composition of the gel was
SiO₂/Al₂O₃ > 100,000
TEA₂O/SiO₂ = 0.27
(TEA⁺/SiO₂ = 0.54)
H₂O/SiO₂ = 7.1
F⁻/SiO₂ = 0.54

The autoclaves are cooled after 14.5 hours. The reaction mixture has a pH of ≈ 8.8. By X-ray diffraction, it is observed that the solid obtained on filtration is zeolite beta (25.1 g per 100 g of gel) of high crystallinity (103% by comparison with a standard). Chemical analysis indicates an Si/Al mole ratio of the zeolite of greater than 9000. After calcination at 853K, the material maintains its crystallinity (100%).

### Example 7

This example illustrates the preparation of zeolite beta of Si/Al ratio = 26, in the presence of HF and in the absence of seed.

0.25 g of metallic Al is dissolved in 20 g of tetraethylammonium hydroxide (35%, Aldrich), and 3 g of deionized water are added. Separately, 48.26 g of tetraethyl orthosilicate are hydrolysed in a solution of 36.53 g of tetraethylammonium hydroxide (35%, Aldrich) and 1.95 g of deionized water. The Al solution is added to the tetraethyl orthosilicate solution, and the mixture is left stirring at room temperature to evaporate off the ethanol formed. 5.21 g of HF (48%) are then added. The same procedure for heating and processing the product as in the previous example is followed. In this case the composition of the gel was
SiO₂/Al₂O₃ = 50
TEA₂O/SiO₂ = 0.29
(TEA⁺/SiO₂ = 0.58)
H₂O/SiO₂ = 7.1
F⁻/SiO₂ = 0.54

The autoclaves are cooled after 62.5 hours. The reaction mixture has a pH of ≈ 9.5. By X-ray diffraction, it is observed that the solid obtained on filtration is zeolite beta (24.77 g per 100 g of gel) of high crystallinity (97% by comparison with a standard). Chemical analysis indicates an Si/Al mole ratio of the zeolite of 26. After calcination at 853K, the material maintains good crystallinity (90%).

### Example 8

This example illustrates the preparation of zeolite Ti-beta without Al, in the presence of HF and seed.

40 g of tetraethyl orthosilicate are hydrolysed in 38.81 g of tetraethylammonium hydroxide (40%, Alfa) and 7.63 g of H₂O₂ (35%, Fcret). Thereafter 0.73 g of Ti tetraethoxide (Alfa) is added. The mixture is stirred at room temperature to evaporate off the ethanol formed. Thereafter 4.39 g of HF (48%) are added and, after homogenization, the mixture is seeded with a suspension in 6.7 g of water of 0.43 g of the seed of Example 1 dealuminized by treatment with concentrated HNO₃ under reflux. The same procedure for heating and processing the product as in the previous example is followed. In this case the composition of the gel was
SiO₂/Al₂O₃ > 100,000
TEA₂O/SiO2 = 0.27
(TEA⁺/SiO₂ = 0.54)
H₂O/SiO₂ = 7.9
F⁻/SiO₂ = 0.54
SiO₂/TiO₂ = 60
H₂O₂/TiO₂ = 24.5

The autoclaves are cooled after 37 hours. The reaction mixture has a pH of ≈ 8.2. By X-ray diffraction, it is observed that the solid obtained on filtration is zeolite beta (23.01 g per 100 g of gel) of high crystallinity (103% by comparison with a standard). Chemical analysis indicates an Si/Al mole ratio of the zeolite of greater than 9000. After calcination at 853K, the material maintains its crystallinity (100%).

### Example 9

This example illustrates the preparation of zeolite beta without Al, in the presence of HF and in the absence of seed.

40 g of tetraethyl orthosilicate are hydrolysed in 43.62 g of tetraethylammonium hydroxide (35%, Aldrich) and 6.21 g of H₂O. The mixture is stirred at room temperature to evaporate off the ethanol formed. Thereafter 4.32 g of HF (48%) are added. The same procedure for heating and processing the product as in the previous example is followed. In this case the composition of the gel was
SiO₂/Al₂O₃ = ∞
TEA₂O/SiO₂ = 0.27
(TEA⁺/SiO₂ = 0.54)
H₂O/SiO₂ = 7.5
F⁻/SiO₂ = 0.54

The autoclaves are cooled after 64 hours. The reaction mixture has a pH of ≈ 9.2. By X-ray diffraction, it is observed that the solid obtained on filtration is zeolite beta (24.80 g per 100 g of gel) of high crystallinity (Figure 3, 110% by comparison with a standard). Chemical analysis indicates an Si/Al mole ratio of the zeolite of greater than 9000. After calcination at 853K, the material maintains its crystallinity (Figure 4, 107%).

### Example 10

This example illustrates the preparation of zeolite Ti-beta without Al, in the presence of HF and in the absence of seed.

40 g of tetraethyl orthosilicate are hydrolysed in 44.35 g of tetraethylammonium hydroxide (35%, Aldrich) and 2.24 g of H₂O and 6.26 g of H₂O₂ (35%, Foret). Thereafter 0.73 g of tetraethyl orthotitanate is hydrolysed in the resulting solution. The mixture is stirred at room temperature to evaporate off the ethanol formed. Thereafter 4.39 g of HF (48%) are added. The same procedure for heating and processing the product as in the previous example is followed. In this case the composition of the gel was
SiO₂/Al₂O₃ = ∞
SiO₂/TiO₂ = 60
H₂O₂/TiO₂ = 20
TEA₂O/SiO₂ = 0.27
(TEA⁺/SiO₂ = 0.54)
H₂O/SiO₂ = 7.5
F⁻/SiO₂ = 0.54

The autoclaves are cooled after 11 days. The reaction mixture has a pH of ≈ 8.9. By X-ray diffraction, it is observed that the solid obtained on filtration is zeolite beta (23.21 g per 100 g of gel) of high crystallinity (Figure 3, 107% by comparison with a standard). Chemical analysis indicates an Si/Al mole ratio of the zeolite of greater than 9000. After calcination at 853K, the material maintains its crystallinity (Figure 4, 104%).

## Claims

1. Process for the preparation of a zeolitic crystalline material isomorphous to zeolite Beta which comprises the steps of
(i) forming a reaction mixture comprising water (H₂O), a source of silicon dioxide (SiO₂), a source of fluoride ions (F⁻), a source of tetraethylammonium cations (TEA⁺) and, optionally, a source of an oxide of a trivalent element (X₂O₃), the reaction mixture having a composition expressed in terms of mole ratios in the following ranges:
H₂O/SiO₂, of from 4 to 50
SiO₂/X₂O₃, of at least 10
TEA⁺/SiO₂, of from 0.125 to 0.80
F⁻/SiO₂, of from 0.1 to 2
(ii) crystallising the reaction mixture, and
(iii) recovering the crystalline material formed, wherein the pH after completion of crystallization is in the range from 6 to 12, preferably from 8 to 9.5.

2. A process according to claim 1, wherein the reaction mixture further comprises a source of tetravalent metal oxide, TO₂, in which T represents titanium or vanadium, and, optionally, a source of hydrogen peroxide (H₂O₂), the reaction mixture having a composition expressed in terms of mole ratios in the following ranges:
H₂O/SiO₂, of from 4 to 50
SiO₂/X₂O₃, of at least 10
TEA⁺/SiO₂, of from 0.125 to 0.80
F⁻/SiO₂, of from 0.1 to 2
SiO₂/TO₂, of at least 4
H₂O₂/TO₂, of from 0 to 50.

3. A process according to claim 1 or claim 2, wherein X represents aluminium.

4. A process according to any one of claims 1 to 3, wherein the reaction mixture is heated to a temperature in the range from 363 to 473 K (90 to 200 °C) to effect crystallization.

5. A process according to any one of claims 1 to 4, wherein crystallization promoters are added to the reaction mixture of step (ii).

6. A process according to claim 5, wherein crystals of zeolite beta are added to the reaction mixture as crystallization promoters.

7. A process according to any one of claims 1 to 4, wherein crystallization of the reaction mixture is carried out in the absence of added crystallization promoters.

8. A process according to any one of the preceding claims comprising a further step (iv) in which the crystalline material is calcined in air at a temperature in the range from 570 to 1270 K (297 to 997 °C).

9. A process according to claim 8, wherein calcination of the crystalline material at temperatures in the range from 570 to 1270 K (297 to 997 °C), preferably in the range from 570 to 870 K (297 to 597 °C), effects removal of occluded organic material with losses of crystallinity of less than 20%, and gives rise to a zeolite of composition, in its anhydrous state,
x(HXO₂).yTO₂.SiO₂
wherein x is 0 or a value between 0 and 0.2, y is a value from 0 to 0.1, X represents a trivalent element, preferably aluminium, and T represents titanium or vanadium.

10. Use of a zeolite prepared by the process of claim 9 as a catalyst in processes of cracking, hydrocracking, mild hydrocracking of hydrocarbons and/or functionalized hydrocarbons, hydroisomerization of straight-run gasolines, dewaxing and isodewaxing, alkylation of isoparaffins and olefins and alkylation of aromatics with olefins and alcohols.

11. Use of a zeolite prepared by the process of claim 9 as a catalyst in processes of selective oxidation of organic compounds using H₂O₂ or organic peroxides or hydroperoxides.

## Patentansprüche

1. Verfahren zum Herstellen eines zeolithischen kristallinen Materials, das zu Zeolith Beta isomorph ist, welches die Schritte umfasst:
(i) Bilden eines Reaktionsgemisches, umfassend Wasser (H₂O), ein Ausgangsmaterial von Siliciumdioxid (SiO₂), ein Ausgangsmaterial von Fluoridionen (F⁻), ein Ausgangsmaterial von Tetraethylammoniumkationen (TEA⁺) und gegebenenfalls ein Ausgangsmaterial von einem Oxid von einem dreiwertigen Element (X₂O₃), wobei das Reaktionsgemisch eine Zusammensetzung aufweist, die, angegeben als Molverhältnisse, in den folgenden Bereichen liegt:
H₂O/SiO₂, von 4 bis 50
SiO₂/X₂O₃, mindestens 10
TEA⁺/SiO₂, von 0,125 bis 0.80
F⁻/SiO₂, von 0,1 bis 2
(ii) Kristallisieren des Reaktionsgemisches, und
(iii) Gewinnen des gebildeten kristallinen Materials, wobei der pH nach der Beendigung der Kristallisation im Bereich von 6 bis 12, vorzugsweise von 8 bis 9,5 liegt.

2. Verfahren nach Anspruch 1, wobei das Reaktionsgemisch außerdem ein Ausgangsmaterial von einem Oxid eines vierwertigen Metalls, TO₂, wobei T Titan oder Vanadium bedeutet, und gegebenenfalls ein Ausgangsmaterial von Wasserstoffperoxid (H₂O₂) umfasst, wobei das Reaktionsgemisch eine Zusammensetzung aufweist, die, angegeben als Molverhältnisse, in den folgenden Bereichen liegt:
H₂O/SiO₂, von 4 bis 50
SiO₂/X₂O₃, mindestens 10
TEA⁺/SiO₂, von 0,125 bis 0,80
F⁻/SiO₂, von 0,1 bis 2
SiO₂/TO₂, mindestens 4
H₂O₂/ TO₂, von 0 bis 50

3. Verfahren nach Anspruch 1 oder Anspruch 2, wobei X Aluminium bedeutet.

4. Verfahren nach einem der Ansprüche 1 bis 3, wobei das Reaktionsgemisch auf eine Temperatur im Bereich von 363 bis 473 K (90 bis 200°C) erwärmt wird, um eine Kristallisation zu bewirken.

5. Verfahren nach einem der Ansprüche 1 bis 4, wobei Kristallisationsbeschleuniger zu dem Reaktionsgemisch von Schritt (ii) zugegeben werden.

6. Verfahren nach Anspruch 5, wobei Kristalle von Zeolith Beta als Kristallisationsbeschleuniger zu dem Reaktionsgemisch zugegeben werden.

7. Verfahren nach einem der Ansprüche 1 bis 4, wobei die Kristallisation des Reaktionsgemisches in Abwesenheit von zugegebenen Kristallisationsbeschleunigem erfolgt.

8. Verfahren nach einem der vorangehenden Ansprüche, umfassend einen weiteren Schritt (iv), in dem das kristalline Material in Luft bei einer Temperatur im Bereich von 570 bis 1270 K (297 bis 997"C) calciniert wird.

9. Verfahren nach Anspruch 8, wobei die Calcinierung des kristallinen Materials bei Temperaturen im Bereich von 570 bis 1270 K (297 bis 997°C), vorzugsweise im Bereich von 570 bis 870 K (297 bis 597°C) eine Entfernung von eingeschlossenem organischem Material mit Verlusten der Kristallinität von weniger als 20% bewirkt und zu einem Zeolith mit der Zusammensetzung, im wasserfreien Zustand,
x(HXO₂) · yTO₂ · SiO₂
führt, wobei x 0 oder ein Wert zwischen 0 und 0,2 ist, y ein Wert von 0 bis 0,1 ist, X ein dreiwertiges Element, vorzugsweise Aluminium bedeutet und T Titan oder Vanadium bedeutet.

10. Verwendung eines durch das Verfahren nach Anspruch 9 hergestellten Zeoliths als Katalysator in Verfahren zum Cracken, Hydrocracken, schonenden Hydrocracken von Kohlenwasserstoffen und/oder funktionalisierten Kohlenwasserstoffen, zur Hydroisomerisierung von Destillationsbenzinen, Entwachsung und Isoentwachsung (isodewaxing), Alkylierung von Isoparaffinen und Olefinen und Alkylierung von Aromaten mit Olefinen und Alkoholen.

11. Verwendung eines durch das Verfahren nach Anspruch 9 hergestellten Zeoliths als Katalysator in Verfahren zur selektiven Oxidation von organischen Verbindungen unter Verwendung von H₂O₂ oder organischen Peroxiden oder Hydroperoxiden.

## Revendications

1. Procédé de préparation d'un matériau cristallin de zéolite isomorphe à la zéolite bêta qui comprend les étapes consistant à :
(i) former un mélange réactionnel comprenant de l'eau (H₂O), une source de dioxyde de silicium (SiO₂), une source d'ions fluorure (F⁻), une source de cations tétraéthylammonium (TEA⁺) et, en option, une source d'un oxyde d'un élément trivalent (X₂O₃), le mélange réactionnel ayant une composition exprimée en termes de rapports molaires dans les plages suivantes :
H₂O/SiO₂, de 4 à 50
SiO₂/X₂O₃, d'au moins 10
TEA⁺/SiO₂, de 0,125 à 0,80
F⁻/SiO₂, de 0,1 à 2
(ii) cristalliser le mélange réactionnel, et
(iii) récupérer le matériau cristallin formé,
**caractérisé en ce que** le pH après la réalisation de la cristallisation est dans la plage de 6 à 12, de préférence de 8 à 9,5.

2. Procédé selon la revendication 1, **caractérisé en ce que** le mélange réactionnel comprend en outre une source d'oxyde de métal tétravalent, TO₂, formule dans laquelle T représente le titane ou le vanadium, et, en option, une source de peroxyde d'hydrogène (H₂O₂), le mélange réactionnel ayant une composition exprimée en termes de rapports molaires dans les plages suivantes :
H₂O/SiO₂, de 4 à 50
SiO₂/X₂O₃, d'au moins 10
TEA⁺/SiO₂, de 0,125 à 0,80
F⁻/SiO₂, de 0,1 à 2
SiO₂/TO₂, d'au moins 4
H₂O₂/TO₂, de 0 à 50.

3. Procédé selon la revendication 1 ou la revendication 2, **caractérisé en ce que** X représente l'aluminium.

4. Procédé selon l'une quelconque des revendications 1 à 3, **caractérisé en ce qu**'on chauffe le mélange réactionnel à une température dans la plage de 363 à 473 °K (90 à 200°C) pour effectuer la cristallisation.

5. Procédé selon l'une quelconque des revendications 1 à 4, **caractérisé en ce qu**'on ajoute des promoteurs de cristallisation au mélange réactionnel de l'étape (ii).

6. Procédé selon la revendication 5, **caractérisé en ce qu**'on ajoute des cristaux de zéolite bêta au mélange réactionnel comme promoteurs de cristallisation.

7. Procédé selon l'une quelconque des revendications 1 à 4, **caractérisé en ce qu**'on effectue la cristallisation du mélange réactionnel en absence de promoteurs de cristallisation additionnels.

8. Procédé selon l'une quelconque des revendications précédentes, comprenant une étape supplémentaire (iv) dans laquelle on calcine le matériau cristallin dans l'air à une température dans la plage de 570 à 1270 °K (297 à 997°C).

9. Procédé selon la revendication 8, **caractérisé en ce que** la calcination du matériau cristallin à des températures dans la plage de 570 à 1270 °K (297 à 997°C), de préférence dans la plage de 570 à 870 °K (297 à 597°C), effectue l'élimination d'un matériau organique occlus avec des pertes de cristallinité inférieures à 20%, et donne une augmentation de zéolite dans la composition, dans son état anhydre,
x(HXO₂).yTO₂.SiO₂
formule dans laquelle x vaut 0 ou a une valeur entre 0 et 0,2, y a une valeur de 0 à 0,1, X représente un élément trivalent, de préférence l'aluminium, et T représente le titane ou le vanadium.

10. Utilisation d'une zéolite préparée par le procédé de la revendication 9 comme catalyseur dans des procédés de craquage, d'hydrocraquage, d'hydrocraquage doux d'hydrocarbures et/ou d'hydrocarbures fonctionnalisés, d'hydroisomérisation d'essences de première distillation, de déparaffinage et d'isodéparaffinage, d'alkylation d'isoparaffines et d'oléfines et d'alkylation d'aromatiques par des oléfines et des alcools.

11. Utilisation d'une zéolite préparée par le procédé de la revendication 9 comme catalyseur dans des procédés d'oxydation sélective de composés organiques en utilisant H₂O₂ ou des peroxydes organiques ou des hydroperoxydes.
